(19) Europäisches Patentamt
European Patent Office
Office européen des brevets

(11) **EP 2 862 452 A1**

(12) **EUROPEAN PATENT APPLICATION**
published in accordance with Art. 153(4) EPC

(43) Date of publication:
**22.04.2015 Bulletin 2015/17**

(21) Application number: **13806620.4**

(22) Date of filing: **17.06.2013**

(51) Int Cl.:
***A23L 1/16*** (2006.01)

(86) International application number:
**PCT/JP2013/066603**

(87) International publication number:
**WO 2013/191136 (27.12.2013 Gazette 2013/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.06.2012 JP 2012136692**

(71) Applicant: **Nisshin Foods Inc.
Tokyo 101-8441 (JP)**

(72) Inventors:
• **MAEDA, Tatsurou
Tokyo 103-8544 (JP)**

• **IRIE, Kentarou
Fujimino-shi
Saitama 356-8511 (JP)**
• **NAKANISHI, Yumiko
Fujimino-shi
Saitama 356-8511 (JP)**

(74) Representative: **Blodig, Wolfgang
Wächtershäuser & Hartz
Patentanwaltspartnerschaft mbB
Weinstrasse 8
80333 München (DE)**

(54) **FRESH PASTA AND METHOD FOR MANUFACTURING FROZEN FRESH PASTA**

(57) Fresh pastas which can be stored in a frozen state for a long time and which retain favorable appearance and texture comparable to freshly boiled fresh pastas even after being thawed are provided. The fresh pastas have a surface roughness with Ra being from 1.0 to 10.0 μm on average and/or Ry being from 10 to 50 μm on average.

EP 2 862 452 A1

**Description**

[Technical Field]

The present invention relates to fresh pasta. In more detail, the present invention relates to fresh pastas which suffer little quality deterioration during frozen-storage.

[Background Art]

Fresh pastas are pastas which are produced from dough without going through a drying step. Fresh pastas are different foods from dried pastas in terms of production steps as well as taste, flavor and appearance of a product. Fresh pastas are popular foods because they attain a soft yet elastic, unique texture after boiled. However, because fresh pastas have poor storage stability due to a high water content, they have the following problem: they cannot be cooked in advance to keep a couple of days. Fresh pastas in a chilled or frozen state are commercially available. However, chilled products can be distributed only through limited marketing channels due to the infeasibility of prolonged storage. Meanwhile, there is a problem that even if fresh pastas are frozen-stored, either before or after they are cooked, the noodle surface of the pastas presents a rough appearance and resilience (*koshi*) and viscoelasticity are lost, resulting in failure to maintain their favorable texture before frozen-storage. Further, there is a problem that because the noodle surface of boiled fresh pasta becomes rough during frozen-storage, when the pasta is frozen with sauce on top, the sauce penetrates into the pasta during storage, causing deterioration in the quality.

Fresh pastas which can be stored for a long time have already been proposed before. For example, Patent Literature 1 describes a method for producing quickly-rehydratable fresh pastas having storage stability, comprising drying dough, which has been extruded out at a specific pressure under specific vacuum conditions, to certain water content, and then sealing and sterilizing the dough. However, because the above fresh pastas have been subjected to a drying process, the fresh pastas have a similar texture to that of boiled dried pasta, failing in providing a satisfactory soft and elastic, texture unique to fresh pastas.

Patent Literature 2 describes a method, comprising frozen-storing semi-fresh pastas, which have been cooked by boiling, and cooking the pastas with water in a microwave oven before serving. However, because the pastas provided by the above cooking method are semi-fresh pasta prepared by boiling dried pasta, they have a completely different texture from so-called fresh pasta boiled in the fresh state.

Patent Literature 3 describes a method for producing fresh noodles with excellent storage stability, comprising kneading wheat flour or wheat semolina, activated gluten powder and/or egg white and water, and then subjecting the resulting mixture to extrusion under reduced pressure. However, although the resulting fresh noodles had a favorable appearance, the fresh noodles were unsatisfactory in terms of storage stability.

In light of the above, there is a demand for cooked pastas which can be stored in a frozen state for a long time, while maintaining a soft yet elastic texture unique to boiled fresh pasta even after frozen-storage.

[Citation List]

[Patent Literature]

[Patent Literature 1] JP-B-S63-32424
[Patent Literature 2] JP-A-H10-295302
[Patent Literature 3] JP-A-2001-245617

[Summary of Invention]

[Technical Problem]

In general, fresh pastas are produced by rolling out noodle dough while applying pressure and cutting out the resulting noodle dough or by extruding noodle dough while applying pressure in accordance with various noodle production methods such as rolling, rolling, and extruding. However, in either case, noodle production was not carried out under high pressure because there was no need to dry noodles according to conventional production methods of fresh pastas, and moreover, in order that lack of a soft yet elastic, chewy and resilient (*mochimochi*) texture of noodles had to be avoided. According to conventional production methods of fresh pastas, pressure applied to noodle dough during noodle production is approximately 0 kgf/cm$^2$ in the case of rolling, and it is only approximately 20 kgf/cm$^2$ even in the

case of extrusion.

However, these conventional fresh pastas provide a favorable texture only when the fresh pastas are boiled immediately after produced and eaten. A problem of conventional fresh pastas is that once frozen-stored, the fresh pastas have a texture similar to that of soggy *udon* after being thawed, and moreover, when sauce is poured on the thawed noodles, the sauce penetrates into the noodles, causing further deterioration in the quality.

An object of the present invention is to provide fresh pastas which can be stored in a frozen state for a long time and which retain favorable appearance and texture comparable to freshly boiled fresh pastas even after being thawed.

[Solution to Problem]

The present inventors conducted intensive studies on the cause of deterioration in the texture of fresh pastas after being thawed. As a result, they have found that conventional fresh pastas have large surface roughness. It was speculated that, because of this surface roughness, conventional fresh pastas suffer quality deterioration by being subjected to freezing and thawing treatments.

Based on the above findings, the present inventors conducted further studies. As a result, they have found that frozen pastas, which are obtained by freezing fresh pastas having a specific surface roughness directly or after being cooked with heat, are highly resistant to freezing, and thus can be stored in a frozen state for a long time. Moreover, they have found that when the frozen fresh pastas are thawed, and if necessary, cooked with heat, the resulting pastas achieve favorable appearance and texture comparable to fresh pastas which are cooked immediately after production, thereby completing the present invention.

That is, the present invention provides fresh pastas having such surface roughness that Ra is from 1.0 to 10.0 $\mu$m on average and/or Ry is from 10 to 50 $\mu$m on average.

The present invention further provides a method for producing frozen fresh pastas, comprising a step of freezing the fresh pastas.

The present invention further provides a method for producing cooked and frozen pastas, comprising a step of freezing the fresh pastas after being cooked with heat.

[Advantageous Effects of Invention]

The fresh pastas of the present invention are highly resistant to freezing even when they are frozen directly or after being cooked with heat, therefore suffering very little quality deterioration during frozen-storage. When the fresh pastas of the present invention are thawed and, if necessary, cooked with heat after frozen-stored directly or after being cooked with heat, they can provide favorable appearance and texture comparable to fresh pastas which are cooked immediately after production. Further, even when the fresh pastas of the present invention are frozen-stored with sauce on top after being cooked with heat, deterioration of quality caused by the penetration of sauce into pasta during storage can be prevented.

[Description of Embodiments]

The present invention provides fresh pastas having a specific level of surface roughness. The surface roughness of the fresh pastas of the present invention is, in terms of the average value of the surface roughness standard Ra, from 1.0 to 10.0 $\mu$m, preferably from 2.0 to 7.5 $\mu$m, in the uncooked state. When the fresh pastas of the present invention are cooked with heat, the average value of Ra is from 2.0 to 7.5 $\mu$m, preferably from 3.5 to 4.5 $\mu$m. Alternatively, the surface roughness of the fresh pastas of the present invention is, in terms of the average value of the surface roughness standard Ry, from 10 to 50 $\mu$m, preferably from 13 to 40 $\mu$m, in the uncooked state. Also, when the fresh pastas of the present invention are cooked with heat, the average value of Ry is from 10 to 50 $\mu$m, preferably from 20 to 30 $\mu$m.

Accordingly, the fresh pastas of the present invention may have a surface roughness with Ra being from 1.0 to 10.0 $\mu$m on average, or Ry being from 10 to 50 $\mu$m on average, in the uncooked state, and preferably, Ra and Ry are in the aforementioned ranges. More preferably, Ra is from 1.0 to 10.0 $\mu$m on average and Ry is from 13 to 40$\mu$m on average, or Ra is from 2.0 to 7.5 $\mu$m on average and Ry is from 10 to 50 $\mu$m on average. Even more preferably, Ra is from 2.0 to 7.5 $\mu$m on average and Ry is from 13 to 40 $\mu$m on average.

Also, the fresh pastas of the present invention may have a surface roughness with Ra being from 2.0 to 7.5 $\mu$m on average or Ry being from 10 to 50 $\mu$m on average after being cooked with heat, and preferably, Ra and Ry are in the aforementioned ranges. More preferably, Ra is from 2.0 to 7.5 $\mu$m on average and Ry is from 20 to 30 $\mu$m on average, or Ra is from 3.5 to 4.5 $\mu$m on average and Ry is from 10 to 50 $\mu$m on average. Even more preferably, Ra is from 3.5 to 4.5 $\mu$m on average and Ry is from 20 to 30 $\mu$m on average.

When the aforementioned Ra is less than 1.0 $\mu$m on average, the surface of the fresh pastas is overly tightened and loses elasticity, and even when such fresh pastas are cooked, they result in having an extremely hard texture as well as a sauce poorly clings thereto. On the other hand, when Ra exceeds 10.0 $\mu$m on average, fresh pastas result in having coarse appearance and texture even when they are cooked, and they further degenerate during frozen-storage, resulting in further inferior appearance and texture after being thawed. Meanwhile, when Ry is less than 10 $\mu$m on average, the surface of fresh pastas is overly tightened and loses elasticity, and even when such fresh pastas are cooked, they result in having an extremely hard texture as well as a sauce poorly clings thereto. On the other hand, when Ry exceeds 50 $\mu$m on average, fresh pastas result in having coarse appearance and texture even when they are cooked, and they further degenerate during frozen-storage, resulting in further inferior appearance and texture after being thawed.

The aforementioned surface roughness standard Ra indicates arithmetic average roughness (JIS B 0601-1994), which is a parameter associated with unevenness of the surface in the height direction. Ra indicates a value obtained by the following formula (I) when the unevenness on the noodle strand surface are precisely measured, a reference length (1) is sampled in the direction of the average line set in the longitudinal direction of the noodle strand, an X-axis is drawn in the direction of the average line and a y-axis is drawn in the direction of vertical magnification in the sampled section, and a roughness curve is expressed as y = f(x). Ra can be determined by measuring the noodle surface using an instrument such as a laser microscope.

$$Ra = \frac{1}{\ell} \int_0^\ell \{f(x)\}\, dx \qquad (I)$$

wherein, $\ell$ represents the reference length

Also, the aforementioned surface roughness standard Ry indicates the maximum height (JIS B 0601-1994). When the unevenness on the noodle strand surface are precisely measured, the reference length (1) is sampled in the direction of the average line set in the longitudinal direction of noodle strand, and the height of the highest peak from the average line is designated as Yp and the depth of the deepest valley from the average line is designated as Yv in the sampled section, the sum of Yp and Yv is referred to as Ry. Ry can be determined by measuring the noodle surface using an instrument such as a laser microscope.

In the present specification, the surface roughness Ra and Ry of uncooked fresh pastas or fresh pastas cooked with heat refer to the surface roughness Ra and Ry obtained by measuring the freeze-dried product of the above uncooked fresh pastas or fresh pastas cooked with heat in accordance with the method described above. In the present specification, the average or average values of the aforementioned Ra and Ry refer to the average values of values obtained by measuring 5 or more different, preferably 10 or more different sites on the same pasta surface.

A method for producing the fresh pastas of the present invention having the aforementioned surface roughness is not particularly limited, and for example, the fresh pastas of the present invention can be produced by adopting a method such as a method of cutting out noodle strands from noodle sheets having a small water content using sharp cutting blades, a method of compacting noodle sheets by applying a high pressure and then cutting out noodle strands from the compacted noodle sheets using sharp cutting blades, and a method of extruding noodle strands by applying an extremely high pressure, in such a way that the resulting noodle strands have the aforementioned surface roughness. Among these methods, a method of producing fresh pastas by applying, to dough, such an unusually high pressure as to be applied to fresh pastas is useful because the fresh pastas of the present invention having the aforementioned surface roughness can be efficiently produced by this method. For example, the fresh pastas of the present invention can be produced by extruding dough at a pressure of from 30 kgf/cm$^2$ to 200 kgf/cm$^2$, preferably from 80 kgf/cm$^2$ to 160 kgf/cm$^2$.

As described above, noodle production was not carried out under high pressure according to conventional production methods of fresh noodles because there was no need to dry noodles, and moreover, in order that lack of a soft yet elastic, chewy and resilient (*mochimochi*) texture of noodles had to be avoided. According to conventional production methods of fresh noodles, pressure applied to noodle dough is approximately 0 kgf/cm$^2$ in the case of rolling, and it is only approximately 20 kgf/cm$^2$ even in the case of extrusion. In contrast, the aforementioned extrusion pressure applied in the production method of the fresh pastas of the present invention is equal to or higher than the extrusion pressure normally used in the production of dried pasta (approximately from 70 to 160 kgf/cm$^2$), showing that the extrusion pressure used in the production method of the fresh pastas of the present invention is extremely high to be applied to fresh pastas.

When the aforementioned extrusion pressure is less than 30 kgf/cm$^2$, the fresh pastas obtained result in having coarse appearance and texture even when they are cooked, and they further degenerate during frozen-storage, resulting in deteriorated appearance and texture after being thawed. On the other hand, when the aforementioned extrusion pressure exceeds 200 kgf/cm$^2$, the elasticity of the fresh pastas obtained is lost, and even when such fresh pastas are cooked, they result in having an extremely hard texture as well as a sauce poorly clings thereto.

Dough for fresh pastas used in the production method of fresh pastas of the present invention may be regular noodle dough obtained by adding kneading water to 100% wheat flour or a flour ingredient containing wheat flour as the main component, followed by kneading. Wheat flour used for the aforementioned flour ingredient is not particularly limited as long as it is one that can be used for pastas, and examples thereof include hard wheat flour, semi-hard wheat flour, moderate wheat flour, soft wheat flour, durum wheat flour and semolina flour such as durum semolina. These flours can be used singly or in combinations of two or more thereof.

In addition to the aforementioned wheat flour, other ingredients normally used for the production of fresh pastas such as starch, sugars, gluten, eggs, table salt, oil or fat, emulsifiers and thickeners can be added to the aforementioned flour ingredient. The amounts of these other ingredients added may be from 0 to 30 parts by mass relative to 100 parts by mass of the aforementioned wheat flour.

As the kneading water used for the production of dough, any kind of water used for routine noodle production such as of water, salt water and lye water can be used. Considering that the dough obtained is subjected to such a high extrusion pressure as described above, the amount of kneading water added is preferably from 20 to 40 parts by mass, more preferably from 23 to 35 parts by mass, even more preferably from 25 to 32 parts by mass relative to 100 parts by mass of the flour ingredient. When the amount of kneading water added is less than 20 parts by mass, the extruded noodle strands become fragile. On the other hand, when the amount of kneading water added exceeds 40 parts by mass, the dough becomes weak and susceptible to damage, resulting in failure of the fresh pastas thus obtained to achieve the desired appearance or texture.

The fresh pastas of the present invention can be obtained by producing noodles from the aforementioned dough under the aforementioned high pressure. For example, the fresh pastas of the present invention can be produced by extruding dough into noodles under the aforementioned pressure using, for example, an extrusion noodle making machine used for the production of *soba* (buckwheat) noodles, dried pasta and the like. When carrying out noodle extrusion, it is preferable to extrude noodle dough under reduced pressure conditions so as to improve the durability of the resulting noodles. The degree of pressure reduction may be from -200 mmHg to vacuum, preferably from -600 mmHg to vacuum.

The shape of the fresh pastas of the present invention is not particularly limited. For example, after extruding noodle dough into noodle sheets, they can be made into the desired shape such as noodle strand by, for example, rolling, cutting and the like in accordance with a routine method. Alternatively, pastas can be extruded to form the desired shape through a die having openings of appropriate shape. The noodle sheet may be a single-layered noodle sheet made of one dough, or a multi-layered noodle sheet made of the same or different doughs laminated. As long as noodle sheets are laminated in such a way that dough produced under the aforementioned high pressure is positioned on the surface of fresh pasta obtained as a final product, the multi-layered noodle sheet may contain a noodle sheet other than one produced under the aforementioned high pressure. For example, a noodle sheet produced without applying high pressure, for example, by means of roller rolling, may be sandwiched between two noodle sheets produced under the aforementioned high pressure.

The fresh pastas of the present invention which are produced by the aforementioned procedure can be directly cooked or eaten without being subjected to a drying step, etc. Alternatively, the fresh pastas of the present invention may be frozen directly or after being cooked with heat by a common method such as boiling, steaming, or microwave heating, as needed, without being subjected to a drying step, etc. Accordingly, the present invention also provides a method for producing frozen fresh pastas, comprising a step of freezing the fresh pastas of the present invention. The present invention also provides a method for producing cooked and frozen pastas, comprising a step of freezing the fresh pastas of the present invention after being cooked with heat.

For example, when the fresh pastas are boiled in the aforementioned method for producing cooked and frozen pastas, a regular boiling method used for noodles may be adopted. In general, pastas may be cooked in boiling water for from two to eight minutes. After optionally draining hot water off and cooling the noodles cooked with heat, they are subjected to a freezing process.

When the fresh pastas or cooked pastas of the present invention are frozen, a freezing process routinely performed on noodles can be adopted. For example, it is preferable that the fresh pastas or the cooked pastas as described above be divided into certain portions, for example, from 150 to 300 g for one person, served on trays, etc., and then subjected to freezing process. For the freezing process, either quick freezing or slow freezing may be feasible; however, quick freezing can be adopted. Once the pastas are frozen by quick freezing, they can be stored under normal frozen-storage conditions.

In the aforementioned freezing process, the cooked pastas may be frozen with sauce. For example, it may be possible to pour sauce on top of the pastas cooked with heat and divided into trays as described above followed by freezing, or it may also be possible to mix sauce with the pastas cooked with heat and serve them on trays, followed by freezing. As the sauce, any regular pasta sauce may be used, and examples thereof include a tomato-based sauce such as meat sauce, Neapolitan sauce and arrabbiata sauce, a white sauce such as carbonara sauce, an oil-based sauce such as pepperoncino (aglio e olio) sauce and a brown sauce; however, the sauce is not limited to these examples. The aforementioned sauces may be in any form such as a liquid, a semi-solid, a gel, a solid, a flake, a granule, a powder and a block, before freezing. For example, the aforementioned sauces may be liquids or freeze-dried solids. Further, these sauces may contain a food ingredient such as vegetables, mushrooms, meats, seafoods, eggs and spices, as appropriate.

[Examples]

Hereinbelow, the present invention will be further described in detail with reference to Examples. However, the present invention is not limited to these Examples.

Reference Example 1 Method for measuring surface roughness

In the following Examples, the surface roughness of fresh pastas was measured as follows.

(Pretreatment: Freeze-drying process)

Samples of fresh pastas were placed on a plastic tray and the tray was frozen for 30 minutes in a quick freezer (-40°C or below). The samples were then placed in a vacuum freezer with a shelf temperature of -40°C (trap -80°C) and a vacuum pump was turned on to reduce the pressure. When the degree of vacuum reached 10 Pa or below, the shelf temperature was controlled to stop cooling, thereby raising the temperature to 20°C. Keeping the above state, the pasta samples were dried, and after they were sufficiently dried, the vacuum was released to atmospheric pressure. The samples were then collected and stored in zip-locking plastic bags.

(Measurement: Laser microscopic observation)

Using the laser microscope VK-8700 (Keyence Corporation), the surface of the freeze-dried pasta samples was measured with a 50x objective lens, and image data of 12 different sites were obtained from one sample. After pretreatment of the data thus obtained (inclination correction, denoising and filtering), an average line was set in the direction of noodle strand on the screen, the X and Y axes were drawn according to the aforementioned procedure to determine a roughness curve, and the resulting roughness curve was substituted into the aforementioned formula (I), whereby the measurement value Ra was obtained for each site. The average value of the 12 measurement values thus obtained was used as the average Ra of the fresh pastas. Also, the height of the highest peak and the depth of the deepest valley from the aforementioned average line were measured and summed to obtain the measurement value Ry for each site. The average value of the 12 measurement values thus obtained was used as the average Ry of the fresh pastas.

Production Examples 1 to 8

Durum wheat semolina flour (100 parts by mass) and water (26 parts by mass) were mixed and then kneaded to prepare noodle dough. The dough was made into noodles by using a roller rolling machine (a pressure condition of 0 kgf/cm$^2$), or extruded into noodles, under a reduced pressure condition of -600 mmHg, by using a pasta making machine under each of the following pressure conditions of 20, 30, 60, 80, 130, 200 and 210 kgf/cm$^2$, whereby eight kinds of fresh spaghetti (1.8 mm in diameter) were obtained.

Production Example 9

A noodle dough was obtained by kneading 100 parts by mass of durum wheat semolina flour and 30 parts by mass of water. The above noodle dough was extruded into a noodle sheet (200 mm in width, 8 mm in thickness) by using an extruder at a vacuum degree of -0.095 MPa (gauge pressure). Separately, a noodle dough was obtained by kneading 100 parts by mass of durum wheat semolina flour and 26 parts by mass of water. This noodle dough was made into a noodle sheet (200 mm in width and 20 mm in thickness) by using a roller rolling machine (a pressure condition of 0 kgf/cm$^2$). Subsequently, the roller-rolled noodle sheet was sandwiched between two extruded noodle sheets (36 mm in thickness) to produce a three-layered noodle sheet. The resulting three-layered noodle sheet was heavily rolled by using a noodle-making roller multiple times at a rolling rate of from 25 to 35% to a thickness of 1.8 mm, and then cut into noodle strands (1.8 mm in diameter) using cutting blades.

Test Example 1

A portion of each of the fresh spaghettis of Production Examples 1 to 9 was collected and measured for surface roughness by the method described in the aforementioned Reference Example 1. The average values of Ra and Ry are shown in Table 2.

The rest of the fresh spaghetti of Production Examples 1 to 9 was boiled in hot water for five minutes, whereby boiled spaghetti was produced. The boiled spaghetti was divided into trays (160 mm x 120 mm; made of polypropylene) at 180 g per tray, and further, for half of the trays, 100 g of commercially available canned meat sauce (the product of Nisshin Foods Inc.) was poured on top of the noodle mass. The resulting spaghetti was quickly frozen at -35°C, whereby the cooked and frozen spaghetti (each with and without sauce) were produced.

The above cooked and frozen spaghetti was removed from the trays, packed in polypropylene bags, and then stored at -18°C. After one week, the frozen spaghetti was removed from the bags and then thawed by heating in a microwave oven (600 W). Spaghetti without sauce was heated for three minutes, whereas spaghetti with sauce was heated for 4.5 minutes. The appearance and texture of the spaghetti after being thawed were evaluated. The spaghetti with sauce was lightly mixed after heating and the appearance and texture of the spaghetti with sauce were evaluated. Evaluation was conducted by 10 panelists based on the evaluation criteria shown in Table 1, and average scores were obtained. The results are shown in Table 2.

Also, as Comparative Example 1, commercial frozen fresh pasta was purchased, and a portion of the noodle in a frozen state was collected and measured for surface roughness by the method described in the aforementioned Reference Example 1. The average values of Ra and Ry are shown in Table 2. Further, the rest of the frozen noodle was thawed by heating in a microwave oven (600 W) in accordance with the method as instructed in the item description and the appearance and texture of the thawed noodle were evaluated. Evaluation was conducted by 10 panelists based on the evaluation criteria shown in Table 1, and average scores were obtained. The results are shown in Table 2.

[Table 1]

| | | |
|---|---|---|
| Appearance of spaghetti | 5 | The noodle surface is very smooth and shiny. |
| | 4 | The noodle surface is fairly smooth and shiny. |
| | 3 | The noodle surface is relatively smooth without coarseness. |
| | 2 | The noodle surface is slightly coarse, or slightly melted. |
| | 1 | The noodle surface is coarse, or melted. |
| Texture of spaghetti | 5 | Texture is equivalent to boiled fresh spaghetti with sufficient softness and elasticity. |
| | 4 | Texture is similar to boiled fresh spaghetti with softness and elasticity. |
| | 3 | Texture is slightly similar to boiled fresh spaghetti with moderate softness and elasticity. |
| | 2 | Slightly too soft or slightly too hard, lacking the unique texture of boiled fresh spaghetti. |
| | 1 | Too soft or too hard, lacking the unique texture of boiled fresh spaghetti. |
| Appearance of spaghetti with sauce | 5 | Sauce evenly clings to the entire noodles. |
| | 4 | Sauce generally evenly clings to the entire noodles. |
| | 3 | Sauce slightly unevenly clings to noodles. |
| | 2 | Sauce poorly or unevenly clings to noodles. |
| | 1 | Sauce very poorly and unevenly clings to noodles. |
| Texture of spaghetti with sauce | 5 | Noodle is sufficiently soft and elastic and harmonized well with sauce. Excellent texture. |
| | 4 | Noodle is soft and elastic and harmonized with sauce. Good texture. |
| | 3 | Noodle is relatively soft and elastic. Average texture. |
| | 2 | Noodle is slightly too soft or slightly too hard and absorbed a small amount of sauce. Slightly poor texture. |
| | 1 | Noodle is too soft or too hard and absorbed a large amount of sauce. Poor texture. |

[Table 2]

| | Production Example 1 | Production Example 2 | Production Example 3 | Production Example 4 | Production Example 5 | Production Example 6 | Production Example 7 | Production Example 8 | Production Example 9 | Comparative Example 1 |
|---|---|---|---|---|---|---|---|---|---|---|
| Extrusion pressure (kgf/cm²) | 0 | 20 | 30 | 60 | 80 | 130 | 200 | 210 | - | - |
| Average Ra (μm) | 15.1 | 10.5 | 7.5 | 6.2 | 2.9 | 2.4 | 1.3 | 0.9 | 3.9 | 10.3 |
| Average Ry (μm) | 85.5 | 53.2 | 39.9 | 32.5 | 19.3 | 16.4 | 12.2 | 9.1 | 20.7 | 56.0 |
| Appearance of spaghetti | 2.2 | 2.8 | 4.1 | 4.5 | 4.7 | 4.8 | 4.3 | 3.1 | 3.8 | 2.7 |
| Texture of spaghetti | 2.4 | 3.0 | 3.7 | 4.7 | 4.6 | 4.0 | 3.9 | 2.5 | 3.6 | 2.7 |
| Appearance of spaghetti with sauce | 2.3 | 2.9 | 4.0 | 4.5 | 4.4 | 4.0 | 3.9 | 2.8 | 4.0 | - |
| Texture of spaghetti with sauce | 1.9 | 2.5 | 3.7 | 4.1 | 4.0 | 4.0 | 3.7 | 2.4 | 3.9 | - |

Test Example 2

Fresh spaghettis produced in a similar manner to Production Examples 1, 3, 6 and 8 were boiled for five minutes in hot water, and then cooled with water, whereby boiled spaghettis were produced. A portion of each of the boiled spaghettis was collected and measured for surface roughness by the method described in the aforementioned Reference Example 1. The average values of Ra and Ry are shown in Table 3.

The rest of the aforementioned boiled spaghettis was divided into trays (160 mm × 120 mm; made of polypropylene) at 180 g per tray, and further, for half of the trays, 100 g of commercially available canned meat sauce (the product of Nisshin Foods Inc.) was poured on top of the noodle mass. The resulting spaghettis were quickly frozen at -35°C, whereby the cooked and frozen spaghettis (each with and without sauce) were produced.

The aforementioned cooked and frozen spaghettis were removed from the trays and packed in polypropylene bags, and then stored at -18°C. After one week, the frozen spaghettis were removed from the bags and then thawed by heating in a microwave oven (600 W). Spaghetti without sauce was heated for three minutes, whereas spaghetti with sauce was heated for 4.5 minutes. The appearance and texture of the spaghetti after being thawed were evaluated. The spaghetti with sauce was lightly mixed after heating and the appearance and texture of the spaghetti with sauce were evaluated. Evaluation was conducted by 10 panelists based on the evaluation criteria shown in Table 1, and average scores were obtained. The results are shown in Table 3.

[Table 3]

|  | Production Example 1 | Production Example 3 | Production Example 6 | Production Example 8 |
|---|---|---|---|---|
| Extrusion pressure (kgf/cm$^2$) | 0 | 30 | 130 | 210 |
| Average Ra ($\mu$m) | 10.9 | 4.2 | 3.8 | 0.9 |
| Average Ry ($\mu$m) | 51.0 | 25.4 | 23.1 | 19.8 |
| Appearance of spaghetti | 1.5 | 4.1 | 4.5 | 3.6 |
| Texture of spaghetti | 2.4 | 3.9 | 4.6 | 2.2 |
| Appearance of spaghetti with sauce | 2.3 | 4.0 | 4.4 | 3.4 |
| Texture of spaghetti with sauce | 1.8 | 3.7 | 4.3 | 2.5 |

**Claims**

1.   Fresh pasta having a surface roughness with Ra being from 1.0 to 10.0 $\mu$m on average and/or Ry being from 10 to 50 $\mu$m on average.

2.   A method for producing frozen fresh pasta, comprising a step of freezing the fresh pasta according to claim 1.

3.   A method for producing cooked and frozen pasta, comprising a step of freezing the fresh pasta according to claim 1 after being cooked with heat.

4.   The method according to claim 3, wherein the pasta cooked with heat is frozen with sauce.

| INTERNATIONAL SEARCH REPORT | International application No. |
|---|---|
| | PCT/JP2013/066603 |

**A. CLASSIFICATION OF SUBJECT MATTER**
*A23L1/16(2006.01)i*

According to International Patent Classification (IPC) or to both national classification and IPC

**B. FIELDS SEARCHED**

Minimum documentation searched (classification system followed by classification symbols)
A23L1/16

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-070272 A (Kao Corp.),<br>18 March 1997 (18.03.1997),<br>paragraphs [0025] to [0027]<br>(Family: none) | 1-3<br>4 |
| Y | WO 01/08508 A1 (Nippon Sanso Corp.),<br>08 February 2001 (08.02.2001),<br>claims; page 10, lines 14 to 20<br>& JP 4348887 B      & US 6770312 B1<br>& EP 1118272 A1      & AU 6315700 A<br>& HK 1040887 A      & AU 777955 B<br>& TW 243021 B      & CN 1318982 A | 4 |
| E,X | WO 2013/094724 A1 (Nisshin Foods Inc.),<br>27 June 2013 (27.06.2013),<br>& CN 103169018 A | 1-4 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 September, 2013 (06.09.13) | Date of mailing of the international search report<br>17 September, 2013 (17.09.13) |
|---|---|
| Name and mailing address of the ISA/<br>Japanese Patent Office | Authorized officer |
| Facsimile No. | Telephone No. |

Form PCT/ISA/210 (second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6332424 B
- JP H10295302 A
- JP 2001245617 A